# EUROPEAN PATENT APPLICATION

(11) **EP 4 701 174 A1**
(43) Date of publication of application: **25.02.2026**
(21) Application number: 25192188.8
(22) Date of filing: 28.07.2025
(51) Int. Cl.: H04N 1/00, G06V 20/30

(54) **IMAGE MANAGEMENT SERVER AND IMAGE MANAGEMENT METHOD**

(30) Priority: 22.08.2024 JP 2024140718
(71) Applicant: Canon Kabushiki Kaisha, Tokyo, 146-8501 (JP)
(72) Inventor: YAO, Reiko, Tokyo, 146-8501 (JP); ISHIKAWA, Rei, Tokyo, 146-8501 (JP)
(74) Representative: Canon Europe Limited

(57) **Abstract**

An image management server includes image receiving means configured to receive an image, sorting condition setting means configured to set a sorting condition for the image, transfer means configured to transfer the image to an external transfer destination folder associated with the sorting condition, and retransmission accepting means configured to accept a retransmission request for the image in a case where transfer by the transfer means fails. In response to either of a change of the sorting condition or the name of the sorting condition and deletion of the sorting condition during a period from the failed transfer to acceptance of the retransmission request, the transfer means transfers the image to the external transfer destination folder associated with the sorting condition used in the failed transfer.

## Description

### TECHNICAL FIELD

The present disclosure relates to image management servers and image management methods.

### BACKGROUND

There are technologies for transferring images captured by an imaging device, such as a digital camera, to a server via a network, sorting the images based on image sorting conditions set in advance by a user, and transferring the sorted images to external storages. In these technologies, a storage destination as a transfer destination is associated with an image so that a sorting condition used to sort the image is identified on an external storage. An image may fail to be transferred to an external storage due to, for example, a communication error on the network or an authentication error at the external storage, serving as a transfer destination.

In this case, the image that has failed to be transferred can be retransmitted by a user operation. However, a sorting condition for the image may be changed during a period from the transfer failure to the retransmission.

Japanese Patent Laid-Open No. 2020-194201 discloses a technology for associating a storage destination with an image. Japanese Patent Laid-Open No. 2020-194201 describes a system in which data scanned by a multifunction printer (MFP) is stored in a cloud storage. In the system, machine learning is used to learn the correspondences between feature values of scanned images and storage destinations, and a storage destination for image data is determined based on a feature value of the image data.

In the above-described technology, the storage destination is uniquely determined by the system rather than a user. Therefore, the storage destination is not affected when an image fails to be stored in a cloud storage due to a network communication error or any other error and is retransmitted.

However, if either a sorting condition or the name of the sorting condition is changed or deleted during a period from transfer failure to retransmission, the sorting condition used for retransmission may fail to be determined uniquely.

In response to the above issue, the present disclosure is directed to appropriately retransmitting an image even if either a sorting condition or the name of the sorting condition is changed or deleted during a period from transfer failure to retransmission.

### SUMMARY

The present disclosure in its first aspect provides an image management server as specified in claim 1. Optional features are specified in claim 2.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating the configuration of a system according to an embodiment.
Fig. 2 is a diagram illustrating an example hardware configuration of an image management server according to an embodiment.
Fig. 3 is a schematic functional block diagram of an image management server according to a first embodiment.
Fig. 4 is a flowchart of a fundamental process according to the first embodiment.
Fig. 5 is a diagram illustrating a transfer history table in the first embodiment.
Fig. 6 is a flowchart of a process for retransmission in the first embodiment.
Fig. 7 is a schematic functional block diagram of an image management server according to a second embodiment.
Fig. 8 is a flowchart of a process that is executed in response to either a change or deletion of a sorting condition or the name of the sorting condition in the second embodiment.
Fig. 9 is a flowchart of a process for retransmission in the second embodiment.
Fig. 10 is a diagram illustrating a screen that prompts for confirmation in the second embodiment.
Fig. 11 is a diagram illustrating a screen to select a sorting condition to be used for retransmission in the second embodiment.

### DESCRIPTION OF THE EMBODIMENTS

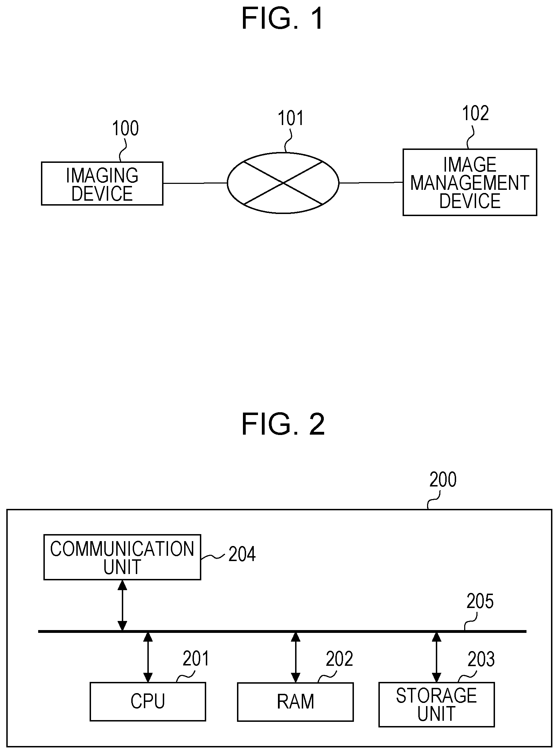

Fig. 1 is a diagram illustrating the configuration of a system according to an embodiment. Each of the embodiments of the present disclosure described below can be implemented solely or as a combination of a plurality of the embodiments or features thereof where necessary or where the combination of elements or features from individual embodiments in a single embodiment is beneficial.

An imaging device 100 such as a digital camera, a mobile phone with a camera, a smartphone, or a tablet terminal is connected to an image management device 102 as an external device via a network 101.

Although Fig. 1 illustrates the configuration in which the devices are connected via the network 101, the devices may be connected directly without a network.

Fig. 2 is a diagram illustrating an example hardware configuration of an image management server according to an embodiment.

Fig. 2 illustrates an information processing apparatus 200.

The information processing apparatus 200 includes a central processing unit (CPU) 201, a random-access memory (RAM) 202, a storage unit 203 as a storage medium such as a hard disk drive (HDD) or a solid-state drive (SSD), a communication unit 204, and a system bus 205.

The CPU 201 uses the RAM 202 as a working memory, executes an operating system (OS) and various computer programs stored in the storage unit 203, and controls the units via the system bus 205.

The programs executed by the CPU 201 include a program for an image management server 300, which will be described later.

This concludes the description of Fig. 2.

### First Embodiment

A first embodiment of the present disclosure will be described below with reference to the drawings and flowcharts. The technical scope of the present disclosure is not limited to this embodiment.

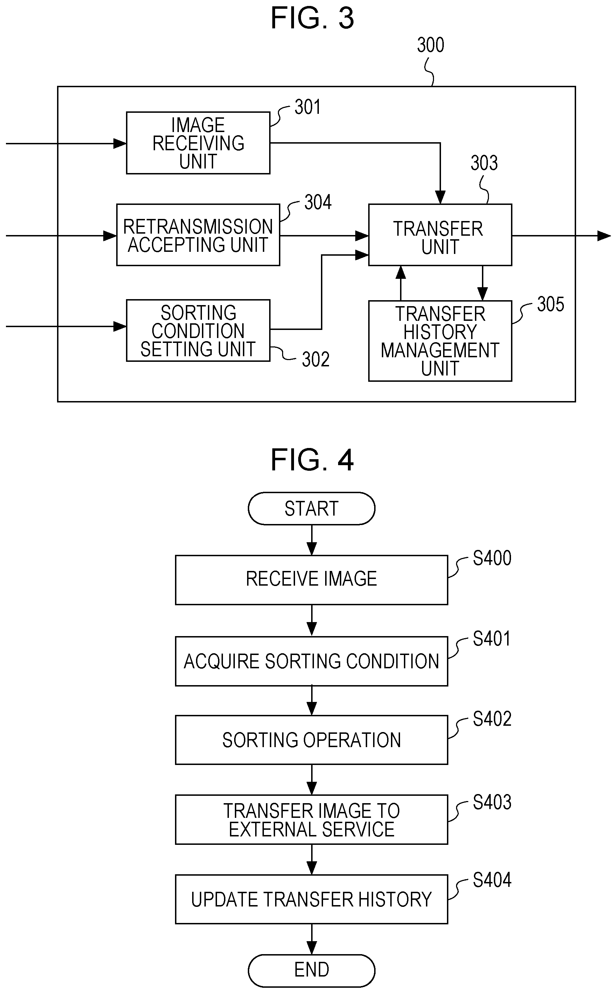

Fig. 3 is a functional block diagram illustrating an example configuration of an image management server according to the first embodiment of the present disclosure. Parts of the image management server will be described below. The image management server may include a processing unit other than processing units illustrated in Fig. 3.

The image management server 300 is illustrated in Fig. 3.

An image receiving unit 301 receives an image captured by an imaging device, such as a digital camera.

A sorting condition setting unit 302 sets a sorting condition for the image. Specifically, the sorting condition setting unit 302 sets conditions for classifying objects such as "humans" and "animals", removing blurred images, and removing images captured at improper exposure. Conditions to be set are not particularly limited.

A transfer unit 303 transfers the image received by the image receiving unit 301 to an external transfer destination folder associated with the sorting condition set by the sorting condition setting unit 302.

A retransmission accepting unit 304 accepts a retransmission request for the image received by the image receiving unit 301 in a case where transfer by the transfer unit 303 fails.

A transfer history management unit 305 manages transfer history used for transfer at the transfer unit 303. Specifically, the transfer history management unit 305 manages, in association with the image received by the image receiving unit 301, information that uniquely identifies the sorting condition set by the sorting condition setting unit 302, the name of the sorting condition, and a status indicating whether the image has been successfully transferred. The transfer history may include parameters other than those described above.

A flowchart of a process in the first embodiment will now be described with reference to Fig. 4. The process of Fig. 4 includes receiving an image, performing a sorting operation based on a sorting condition, and transferring the image to an external service.

Step S400 is an operation of receiving an image. This operation is executed by the image receiving unit 301 in Fig. 3. The image acquired in this step is an image captured by an imaging device, such as a digital camera.

Step S401 is an operation of acquiring a sorting condition. This operation is executed by the sorting condition setting unit 302 in Fig. 3.

Step S402 is a sorting operation. This operation is executed by the transfer unit 303 in Fig. 3.

Step S403 is an operation of transferring the image to an external service. This operation is executed by the transfer unit 303 in Fig. 3. In this step, a folder is created by using the name of the sorting condition acquired in step S401 as a folder name, and the image is then transferred to the external service. Details of this step is not limited to those in the first embodiment.

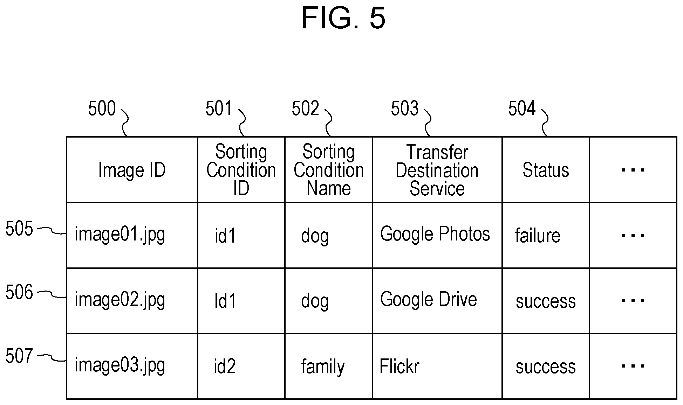

Step S404 is an operation of updating the transfer history. This operation is executed by the transfer history management unit 305 in Fig. 3. A table used to manage the transfer history that is to be updated in this step will now be described with reference to Fig. 5.

Fig. 5 illustrates an example transfer history table describing the transfer history to be updated in step S404 in Fig. 4. The table includes columns 500 to 504 and rows 505 to 507. The transfer history table may include another item to be managed in addition to the items described herein.

The column 500 includes image identifiers (IDs), each of which uniquely identifies an image received at the image receiving unit 301 in Fig. 3.

The column 501 includes sorting condition IDs, each of which uniquely identifies an image sorting condition set at the sorting condition setting unit 302 in Fig. 3.

The column 502 includes sorting condition names, each of which is the name of an image sorting condition set at the sorting condition setting unit 302 in Fig. 3 in a manner similar to that in the column 501.

The column 503 includes transfer destination service information that uniquely identifies a service as a transfer destination to which an image has been transferred by the transfer unit 303 in Fig. 3. Although the information contains the names of the services in the first embodiment, the information may contain IDs uniquely assigned to the services. The information is not particularly limited to this example.

The column 504 includes statuses each indicating whether the transfer unit 303 in Fig. 3 has successfully transferred the image. In the first embodiment, "success" indicates a transfer succeeded status, and "failure" indicates a transfer failed status. The statuses are not particularly limited to those in this example.

The rows 505 to 507 will now be concretely described.

The row 505 describes an example in which the image ID is image01.jpg, the sorting condition ID is id1, the sorting condition name is "dog", and transfer to Google Photos (registered trademark) using this sorting condition failed.

The row 506 describes an example in which the image ID is image02.jpg, the sorting condition ID and the sorting condition name are the same as those associated with image01.jpg in the row 505, and transfer to Google Drive (registered trademark) using this sorting condition succeeded.

The row 507 describes an example in which the image ID is image03.jpg, the sorting condition ID is id2, the sorting condition name is "family", and transfer to Flickr (registered trademark) using this sorting condition succeeded.

This concludes the description of Fig. 5.

Step S404 in Fig. 4 will be described again.

In step S404, the image acquired in step S400 is associated with the sorting condition acquired in step S401 and used in step S402 and the result of transfer in step S403, and the transfer history table of Fig. 5 is updated based on this association.

This concludes the description of Fig. 4.

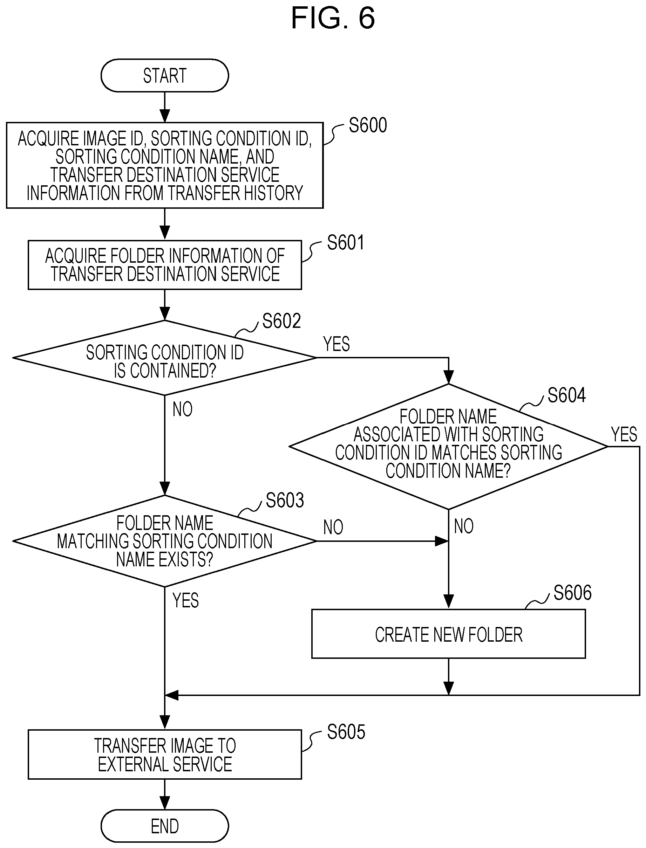

A process for retransmission in the first embodiment will now be described with reference to Fig. 6.

Step S600 is an operation of acquiring the image ID, the sorting condition ID, the sorting condition name, information on a transfer destination service associated with an image with a retransmission request accepted from the transfer history. This operation is executed by the transfer unit 303 in Fig. 3 with reference to the transfer history table managed by the transfer history management unit 305.

Steps S601 to S606 are operations including determining whether a folder associated with the sorting condition ID and the sorting condition name acquired in step S600 exists in a transfer destination service and then transferring the image. The operations in steps S601 to S605 are executed by the transfer unit 303 in Fig. 3. Steps S601 to S606 will be described below.

In step S601, folder information is acquired from the transfer destination service acquired in step S600.

In step S602, whether the sorting condition ID acquired in step S600 is contained in the folder information of the transfer destination service acquired in step S601 is determined. If it is determined in step S602 that the sorting condition ID is not contained in the folder information, the process proceeds to step S603; otherwise, the process goes to step S604.

Step S603 is an operation that is executed in response to a determination in step S602 that the sorting condition ID is not contained in the folder information of the transfer destination service. In step S603, whether a folder name that matches the sorting condition name acquired in step S600 exists is determined with reference to the folder information of the transfer destination service acquired in step S601. If it is determined in step S603 that a folder name matching the sorting condition name exists, the process proceeds to step S605; otherwise, the process goes to step S606.

Step S604 is an operation that is executed in response to a determination in step S602 that the sorting condition ID is contained in the folder information of the transfer destination service. In step S604, whether a folder name associated with the sorting condition ID matches the sorting condition name acquired in step S600 is determined with reference to the folder information of the transfer destination service acquired in step S601. If it is determined in step S604 that the folder name does not match the sorting condition name, the process proceeds to step S606; otherwise, the process goes to step S605.

In step S605, the image is transferred to the external transfer service.

Step S606 is an operation that is executed in response to a determination in step S603 or S604 that a folder corresponding to the sorting condition name acquired in step S600 does not exist in the transfer destination service. In step S606, a new folder is created.

The foregoing is a description of Fig. 6. The process for retransmission in Fig. 6 does not include updating the transfer history as in step S404 in Fig. 4. In other words, an image that failed to be transferred can be retransmitted by using the same sorting condition as that used in the failed transfer.

Such a sequence allows the image management server according to the first embodiment to appropriately retransmit an image using a condition used in failed transfer.

### Second Embodiment

The following description will focus on the difference between the first embodiment and a second embodiment of the present disclosure. The technical scope of the present disclosure is not limited to this embodiment.

The first embodiment has described the method of retransmitting an image that failed to be transferred by using a condition used in the failed transfer. The second embodiment will describe a method including presenting a screen that prompts, in response to a change or deletion of a sorting condition during a period from transfer failure to retransmission, a user to confirm the change or the deletion and presenting a screen that prompts the user to select a sorting condition to be used for retransmission.

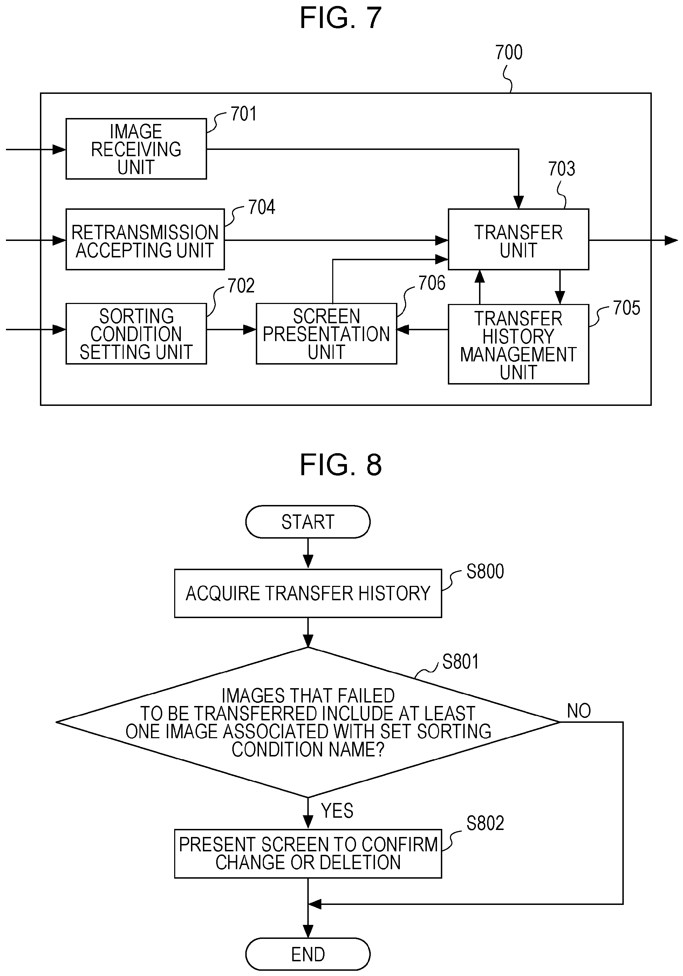

Fig. 7 is a functional block diagram illustrating an example configuration of an image management server according to the second embodiment of the present disclosure. Parts of the image management server will be described below. The image management server may include a processing unit other than processing units illustrated in Fig. 7.

Fig. 7 illustrates the image management server, indicated at 700, according to the second embodiment.

Units 701 to 705, serving as functional blocks, are identical to the units 301 to 305 in Fig. 3, and a detailed description of the units 701 to 705 will be omitted.

A screen presentation unit 706 presents a screen that prompts, in response to either a change or deletion of a sorting condition or a sorting condition name accepted at the sorting condition setting unit 702 during a period from transfer failure to acceptance of a retransmission request, a user to confirm the change or the deletion. The screen presentation unit 706 further presents a screen that prompts the user to select a sorting condition to be used for retransmission.

This concludes the description of Fig. 7.

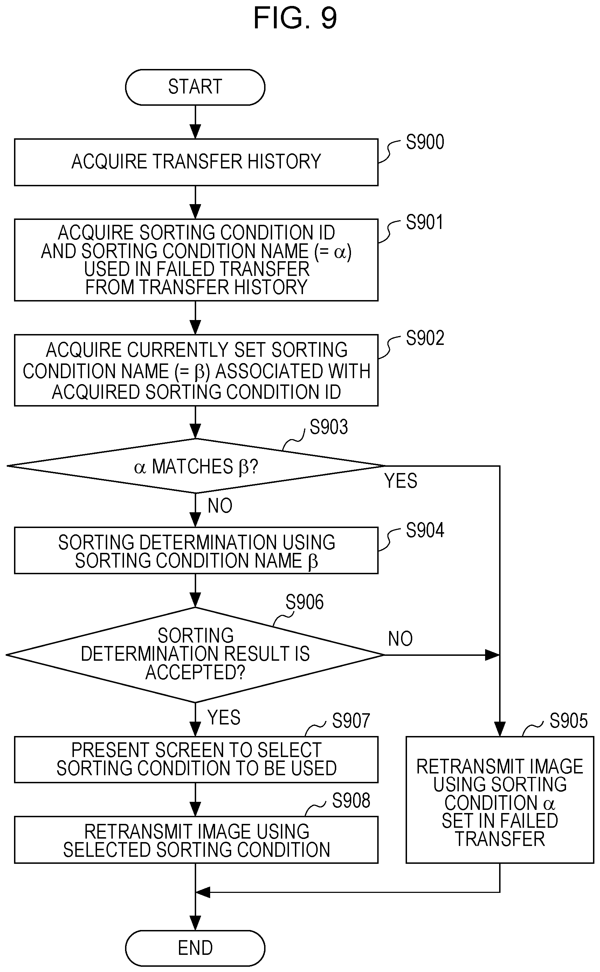

Processes in the second embodiment will now be described with reference to Figs. 8 and 9.

Fig. 8 is a flowchart of a process that is executed in response to either a change or deletion of a sorting condition or a sorting condition name accepted at the sorting condition setting unit during a period from transfer failure to acceptance of a retransmission request.

Fig. 9 is a flowchart of a process for retransmission.

The flowchart of the process of Fig. 8 will now be described. The process of Fig. 8 is executed by the screen presentation unit 706 in Fig. 7.

In step S800, transfer history is acquired from the transfer history management unit 705 in Fig. 7. Information on the transfer history is acquired from the transfer history management unit 705 in Fig. 7 with reference to the transfer history table in Fig. 5 described in the first embodiment.

In step S801, whether images that failed to be transferred include at least one image associated with the set sorting condition name is determined. Only if it is determined in step S801 that at least one image associated with the set sorting condition name is included, the process proceeds to step S802.

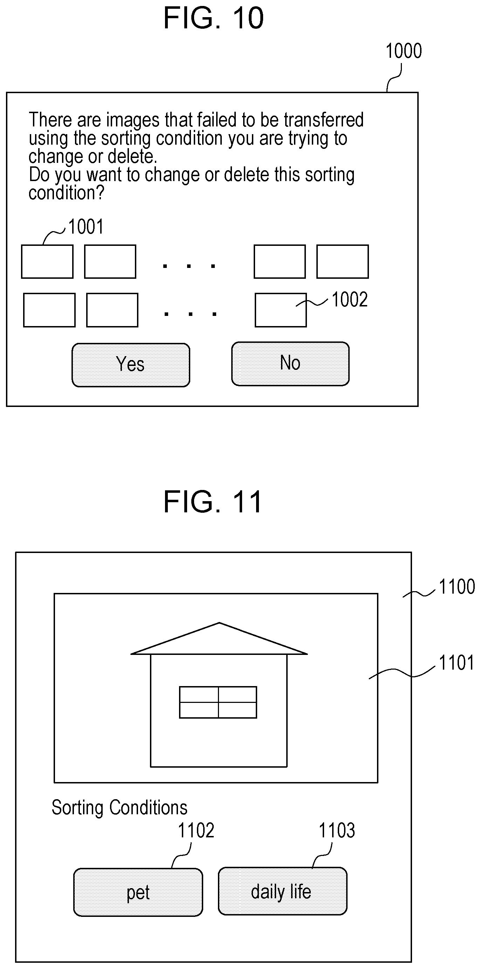

Step S802 is an operation that is executed in response to a determination in step S801 that images that failed to be transferred include at least one image associated with the set sorting condition name. In step S802, a screen that prompts a user to confirm change or deletion is presented. An example screen presented in this step will now be described with reference to Fig. 10.

Fig. 10 illustrates an example screen that prompts, in response to either a change or deletion of a sorting condition or a sorting condition name accepted at the sorting condition setting unit 702 in Fig. 7 during a period from transfer failure to acceptance of a retransmission request, a user to confirm the change or the deletion. The presented screen in the present embodiment is intended to be illustrative only and not restrictive.

Fig. 10 illustrates a screen 1000 that prompts for confirmation.

The screen 1000 displays a message that prompts for confirmation and relevant images 1001 to 1002. The user can select between two options "Yes" and "No" on the screen 1000. Although the screen displaying the relevant images 1001 to 1002 has been described as an example in this embodiment, there is no limitation on whether images are displayed or not.

This concludes the description of Fig. 10.

The process of Fig. 8 will be further described below.

If it is determined in step S801 that images that failed to be transferred include no image associated with the set sorting condition name, the screen described in step S802 is not presented.

This concludes the description of Fig. 8.

The flowchart of the process in Fig. 9 will now be described. The process of Fig. 9 is executed by the screen presentation unit 706 and the transfer unit 703 in Fig. 7.

In step S900, transfer history is acquired from the transfer history management unit 705 in Fig. 7. Information on the transfer history is acquired from the transfer history management unit 705 in Fig. 7 with reference to the transfer history table of Fig. 5 described in the first embodiment.

In step S901, a sorting condition ID and a sorting condition name used in failed transfer are acquired with reference to the transfer history acquired in step S900.

In step S902, the sorting condition name of a sorting condition that is included in currently set sorting conditions and that is associated with the sorting condition ID acquired from the transfer history is acquired.

In step S903, whether the sorting condition name acquired in step S901 matches the sorting condition name acquired in step S902 is determined. If it is determined in step S903 that the sorting condition names do not match, the process proceeds to step S904; otherwise, the process goes to step S905.

Step S904 is an operation that is executed in response to a determination in step S903 that the sorting condition names do not match. In step S904, sorting determination is performed using the sorting condition name acquired in step S902.

Step S905 is an operation that is executed in response to a determination in step S903 that the sorting condition names match. In step S905, an image is retransmitted using the sorting condition acquired in step S901.

In step S906, the result of sorting determination in step S904 is determined. If the sorting determination result is accepted, the process proceeds to step S907; otherwise, the process goes to step S905.

Step S907 is an operation that is executed in response to a determination in step S906 that the sorting determination result is accepted. In step S907, a screen that prompts a user to select a sorting condition to be used is presented. An example screen presented in this step will now be described with reference to Fig. 11.

Fig. 11 illustrates an example screen that prompts a user to select a sorting condition to be used for retransmission in response to either a change or deletion of the sorting condition or the sorting condition name accepted at the sorting condition setting unit 702 in Fig. 7 during a period from transfer failure to acceptance of a retransmission request. The presented screen in this embodiment is intended to be illustrative only and not restrictive.

Fig. 11 illustrates a screen 1100 that prompts a user to select a sorting condition to be used.

Fig. 11 further illustrates an image 1101 to be retransmitted.

Buttons 1102 and 1103 are used to select a sorting condition name as a selection candidate.

This concludes the description of Fig. 11.

The process of Fig. 9 will be further described below.

In step S908, the image is retransmitted using the sorting condition selected by the user on the screen presented in step S907.

This concludes the description of Fig. 9.

Using such a sequence, the image management server according to the second embodiment can present a screen that prompts, in response to a change or deletion of a sorting condition during a period from transfer failure to retransmission, a user to confirm the change or the deletion. In addition, the image management server can present a screen that prompts the user to select a sorting condition to be used for retransmission.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image management server (300) comprising:
image receiving means (301) configured to receive an image;
sorting condition setting means (302) configured to set a sorting condition for the image;
transfer means (303) configured to transfer the image to an external transfer destination folder associated with the sorting condition; and
retransmission accepting means (304) configured to accept a retransmission request for the image in a case where transfer by the transfer means (303) fails,
wherein the transfer means (303) transfers, in response to either of: (A) a change of the sorting condition or a name of the sorting condition and (B) deletion of the sorting condition during a period from the failed transfer to acceptance of the retransmission request, the image based on the retransmission request to the external transfer destination folder associated with the sorting condition used in the failed transfer.

2. The image management server (300) according to claim 1, further comprising:
transfer history management means (305) configured to manage, in association with the image, information that uniquely identifies the sorting condition, the name of the sorting condition, and information indicating whether the image has been successfully transferred.

3. An image management server (700) comprising:
image receiving means (701) configured to receive an image;
sorting condition setting means (702) configured to set a sorting condition for the image;
transfer means (703) configured to transfer the image to an external transfer destination folder associated with the sorting condition;
retransmission accepting means (704) configured to accept a retransmission request for the image in a case where transfer by the transfer means (303) fails; and
screen presentation means (706) configured to present, in response to either of: (A) a change of the sorting condition or a name of the sorting condition and (B) deletion of the sorting condition during a period from the failed transfer to acceptance of the retransmission request, a screen that prompts a user to confirm the change or the deletion.

4. The image management server (700) according to claim 3, wherein the screen presentation means (706) presents, in response to either of a change of the sorting condition or the name of the sorting condition and deletion of the sorting condition during the period from the failed transfer to the acceptance of the retransmission request, a screen that prompts the user to set a sorting condition to be used for retransmission.

5. An image management method comprising:
receiving (S400) an image;
setting (S401) a sorting condition for the image;
transferring (S403) the image to an external transfer destination folder associated with the sorting condition; and
accepting a retransmission request for the image in a case where the transferring fails,
wherein the transferring includes transferring, in response to either of: (A) a change of the sorting condition or a name of the sorting condition and (B) deletion of the sorting condition during a period from the failed transferring to acceptance of the retransmission request, the image based on the retransmission request to the external transfer destination folder associated with the sorting condition used in the failed transferring.

6. An image management method comprising:
receiving (S400) an image;
setting (S401) a sorting condition for the image;
transferring (S403) the image to an external transfer destination folder associated with the sorting condition;
accepting a retransmission request for the image in a case where the transferring fails; and
presenting, in response to either of: (A) a change of the sorting condition or a name of the sorting condition and (B) deletion of the sorting condition during a period from the failed transferring to acceptance of the retransmission request, a screen that prompts a user to confirm the change or the deletion.
